**Europäisches Patentamt**

**European Patent Office**

**Office européen des brevets**

(19)

(11) Publication number: **0 075 545**
**A1**

## (12) EUROPEAN PATENT APPLICATION

(21) Application number: 82850176.7

(22) Date of filing: 06.09.82

(51) Int. Cl.³: **C 08 G 63/22**, C 08 L 67/02, C 08 L 67/06, C 08 K 3/36, C 01 B 33/14

(30) Priority: 18.09.81 SE 8105525

(43) Date of publication of application: 30.03.83 Bulletin 83/13

(84) Designated Contracting States: BE DE FR GB NL

(71) Applicant: EKA AB, Fack, S-445 01 Surte 1 (SE)

(72) Inventor: Holmberg, Krister, Dalgängsgatan 17, S-431 39 Mölndal (SE)
Inventor: Johansson, Jan Allan, Rägäkern 28, S-417 26 Göteborg (SE)
Inventor: Johansson, Elisabet, Dr. Liborius Gata 32, S-413 23 Göteborg (SE)

(74) Representative: Wiklund, Erik et al, AWAPATENT AB Box 5117, S-200 71 Malmö (SE)

(54) A filler-containing polyester and a process for the preparation thereof.

(57) A process and an agent for preparing a filler-containing polyester are described. The polyester is formed of an acid component and an alcohol component, and the invention is characterized in that the alcohol component consists at least partly, preferably in its entirety, of a silica organosol having a polyvalent alcohol as dispersion medium.

EP 0 075 545 A1

ACTORUM AG

# A FILLER-CONTAINING POLYESTER AND A PROCESS FOR THE PREPARATION THEREOF

The present invention relates to filler-containing polyesters, preferably unsaturated polyesters, and to a process for the preparation thereof.

Polyesters are condensation products of polyfunctional acids and alcohols. Traditionally, the polyesters are divided into two types: unsaturated polyesters which are used primarily as starting material for the manufacture of structural plastics, and saturated polyesters which are used primarily as paint binders. An important special case of the latter type are the alkydes, i.e. fatty acid-modified, saturated polyesters.

Both types of polyesters are well-known and are described below in order to explain the technique on which the present invention is based and to which it is applicable.

By unsaturated polyester resins are meant polymer systems with unsaturation of the polyvalent acid or the alcohol included, the unsaturation being contained in the backbone polymer chain, not in a side chain. The term unsaturated polyester (UP) refers both to the resin and to the final plastic, and in the latter case the term provides an indication of how the polyester plastic has been obtained.

Generally, unsaturated polyesters are prepared by causing a polyvalent alcohol and a polyvalent acid to react with one another, the acid component being constituted at least partly by a polyvalent unsaturated acid, such as maleic acid or fumaric acid. Usually, the acid component is a mixture of unsaturated and saturated, polyvalent acids, such as maleic acid and o-phthalic acid. Other acids are isophthalic acid, adipic acid and azelaic acid. In many cases, the acid anhydrides are used instead of the acids proper.

The polyvalent alcohol is usually selected from a glycol, such as ethylene glycol, propylene glycol, butylene glycol, diethylene glycol and dipropylene glycol.

After the alcohol and acid components have reacted with one another, there is obtained an unsaturated polyester resin which, because of its unsaturation, can further react with another, unsaturated monomer. This monomer usually is styrene, although also other unsaturated monomers, such as vinyl toluene, methyl metacrylate, diallyl phthalate and triallyl cyanurate may be used. Frequently, the monomer also functions as a solvent, i.e. it acts as a reactive solvent for the components included.

Undesired curing of the polyester resin by reaction with the unsaturated monomer can be prevented by adding an inhibitor, such as hydroquinone. In this manner, the mixture will be stable for a long time. To initiate the curing reaction, use is made of an initiator, usually an organic peroxide, such as benzoyl peroxide, or a hydroperoxide, such as methylethyl ketone peroxide, methyl isobutyl peroxide or cumene hydroperoxide. The initiator is activated by means of an activator or promotor which usually consists of a cobalt salt, such as cobalt octoate or cobalt naphthenate, or of dimethyl aniline.

As in most other plastic materials, organic or inorganic fillers are sometimes used in unsaturated polyesters. The filler is used on the one hand to impart specific characteristics to the product. and, on the other hand, to reduce its price.

One type of filler is silica which is used both in the form of natural silica, primarily quartz in different crystalline shapes, and in the form of synthetic silica.

Pulverulent synthetic silica is available in different forms, among which may be mentioned

(1) silica aerogel which is a colloidal silica prepared by substituting a low-boiling water-miscible organic liquid for the water of a silica hydrogel, heating in an autoclave above the critical temperature of the

3 0075545

liquid, and then venting the autoclave;

(2) so-called pyrogenic silica which is a colloidal silica obtained by burning silica tetrachloride and collecting the resulting silica smoke;

(3) precipitated silica which is obtained by precipitating silicic acid from a sodium silicate solution, for instance by adding a mineral acid.

The precipitated silica is easy to manufacture and therefore is comparatively cheap. Generally, however, only reasonably small particles of the order of about 50-100 nm are obtained. Manufacture of the pyrogenic silica is relatively complicated but, on the other hand, gives small particles having a large surface area. However, the pyrogenic silica is expensive and has found but restricted use as a filler, inter alia in the polyester plastic industry to impart structural viscosity to so-called gel coats. The pyrogenic silica is admixed in minor amounts only, about 1-5% by weight.

A common feature of the above-mentioned types of silica is that they are used but to a limited extent as fillers for polyesters, and then they are admixed in low percentages of but a few percent. Besides, their completely homogenous distribution in the plastic material is difficult to achieve.

A further type of synthetic silica in the context of the present application is so-called silica hydrosol, i.e. a colloidal aqueous solution of silica. The particle size of this silica is very small (about 5-20 nm), and the particles thus have a large surface area. Because of the water present in this type of silica, it cannot be used as a filler for polyesters.

In addition to the unsaturated polyesters described above, the invention is applicable also to so-called saturated polyesters, especially fatty acid-modified, saturated polyesters, so-called alkyds. The saturated polyesters distinguish over the unsaturated polyesters in that they do not contain any unsaturation in the backbone polymer chain. On the other hand, unsaturation may be found in a side chain if the alkyd contains acids of drying oils. Among the saturated or aromatic acids and alcohols of which saturated polyesters are composed, mention may be made of those previously referred to in connection with the unsaturated polyesters. Furthermore, 3- and 4-valent alcohols, such as glycerol, trimethylol propane and pentaerythritol may be mentioned.

As has been stated above in connection with gel coat, silica is used as a filler also in saturated polyesters in order to achieve increased viscosity and thixotropy.

The present invention has for its object to provide a filler-containing polyester and a process of making said polyester, the filler consisting of colloidal silica in a higher content than has previously been the case, and the silica being extremely homogeneously distributed in the polyester. In this manner, improved characteristics are imparted to the finished product, such as increased hardness, scratch hardness and resistance to chemicals.

It has now been discovered, in connection with the present invention, that these objects are achieved by utilizing as the silica filler a silica organosol, i.e. a colloidal solution of silica in a dispersion medium consisting of a polyvalent alcohol which, at the same time, constitutes at least part of the alcohol component of the polyester. The polyvalent alcohol of the silica organosol preferably constitutes the alcohol component of the entire polyester.

More particularly, the present invention relates to a process of preparing a filler-containing polyester, said process being characterized in that an acid component including a polyvalent carboxylic acid is caused to react with an alcohol component which at least partly consists of a silica organosol having a polyvalent alcohol as dispersion medium.

Furthermore, the invention also relates to an agent for preparing a filler-containing polyester, said agent being characterized in that it consists of a silica organosol having a polyvalent alcohol as dispersion medium.

Other characteristic features of the invention will appear from the appended nonindependent claims.

Silica organosols are previously known in and per se and are made from silica hydrosol by adding an organic solvent and driving off water. In some cases, the addition of the organic solvent is preceded by an ion exchange of the sol. However, as far as is known, such silica organosols have as yet not found any major commercial use, and in particular they have not been used for the purpose of the present invention.

The particle size of the silica in the silica organosol utilized for this invention lies within the colloidal range, i.e. 1-100 nm and preferably is about 5-20 nm.

In the present invention, the silica content of the organosol is about 10-60% by weight, preferably about 15-50% by weight, which corresponds to a content of about 5-25% by weight of silica in the polyester resin, and about 4-20% by weight in the finished plastic.

As has been mentioned before, the polyvalent alcohol which is the dispersion medium in the silica organosol according to the present invention is, at the same time, the alcohol component of the polyester, and the alcohol thus is selected among the different polyvalent alcohols which may be used for this purpose and of which specific examples have been given above. Generally, divalent to tetravalent alcohols are used, especially ethylene glycol, propylene glycol, butylene glycol, glycerol and pentaerythritol.

Since the silica is in the form of a colloid in the alcohol dispersion medium and is completely homogeneously distributed therein, the silica, upon mixture of the acid component of the polyester and the alcohol component thereof which thus consists at least partly of the silica organosol, will also be distributed homogeneously and in the form of colloidal particles in the polyester. Such a homogeneous distribution cannot be achieved if dry silica is used, such as precipitated or pyrogenic silica, since the primary particles of such a silica are formed into agglomerates which remain more or less intact after admixture.

A further difference between the invention and the use of conventional silica as a filler resides in that there is obtained, for instance when pyrogenic silica is used as a filler for gel coat, an intense viscosity increase necessitating the use of a special kneading apparatus, whereas no such phenomena appear when the silica organosol according to the present invention is used.

In the following, some Examples of different forms of the invention are given, and these Examples are merely intended to illustrate the invention and should not be interpreted as restrictive.

In all Examples, the organosol was prepared by adding a polyol to an ion-exchanged silicic acid sol in water, whereupon the water was driven off by vacuum, as disclosed in, for instance, U.S. patent specification 3,699,049.

EXAMPLE 1

220 g adipic acid and 150 g maleic anhydride were added to 350 g of organosol which consisted of 65% ethylene glycol and 35% silicic acid sol. The mixture was heated and stirred under nitrogen gas. The reaction began at about 140°C, and the resulting water was distilled off. The temperature was increased gradually to 190°C. After about 16 h at this temperature, the acid number had been reduced to about 50 mg/KOH/g. The temperature was then reduced to 90°C, whereupon 280 g styrene were added. After that, the mixture was cooled to room temperature.

EXAMPLE 2

115 g adipic acid, 120 g phthalic anhydride and 155 g maleic anhydride were added to 430 g organosol which consisted of 55% ethylene glycol and 45% silicic acid. Xylene (about 100 ml) was added, and the reaction mixture was heated and stirred under nitrogen gas. The reaction began at about 120°C. The resulting water was driven off azeotropically, and all xylene was recycled to the reaction mixture. The reaction temperature was successively increased and, after 10 h, was 170°C. The acid number was then about 60 mg KOH/g. The xylene was then driven off at about 210°C, when the acid number was reduced to about 50 mg KOH/g.

The reaction mixture was rapidly cooled to 90°C, 235 g styrene were added, and the solution was then cooled to room temperature.

EXAMPLE 3

160 g adipic acid, 160 g maleic anhydride and 80 g phthalic anhydride were added to 465 g organosol which consisted of 40% ethylene glycol, 15% propylene glycol and 45% silicic acid. Xylene (about 75 ml) was added, and the mixture was heated and vigorously stirred under nitrogen gas. The resulting water was boiled off azeotropically at about 120°C. The temperature was successively increased to 170°C. When the acid number after about 10 h had been reduced to about 60 mg KOH/g, the xylene was removed at about 210°C, when the acid number was reduced to about 50 mg KOH/g.

The reaction mixture was cooled to 90°C, whereupon 250 g styrene were added, and the solution was cooled to room temperature.

EXAMPLE 4

The polyester resins prepared according to Examples 1-3 were cured with methylethyl ketone peroxide (3%) as initiator and cobalt octoate (1%) as activator. Panels having a thickness of 1 cm were molded and tested in respect of flexural strength at break, surface hardness and resistance to chemicals. The reference employed is a conventional polyester prepared in accordance with Example 3, except that the silicate has been removed therefrom, i.e. the organosol (465 g) was replaced by a mixture of ethylene glycol (186 g) and propylene glycol (70 g).

The values obtained are shown in the Table below.

The flexural strength at break was measured in a conventional tension testing machine. The surface hardness was determined in a so-called Microindentation Apparatus (made by ICI), and the expression $E/1-\nu^2$ ($E=$ modulus of elasticity and $\nu=$Poisson's number) is obtained as a measure of the hardness. To determine the resistance to chemicals, test samples were kept for 7 days at $23^{\circ}C$ immersed in different solvents, followed by visual evaluation.

| | Flexural strength (MPa) | Surface hardness (dyne/cm$^2$) | Resistance to chemicals [x] | | | | |
|---|---|---|---|---|---|---|---|
| | | | petrol | xylene | ethanol | acetic acid | methylethyl ketone |
| Example 1 | 50 | $21.10^8$ | 5 | 5 | 5 | 4 | 3 |
| Example 2 | 41 | $14.10^8$ | 5 | 5 | 5 | 3 | 2 |
| Example 3 | 70 | $25.10^8$ | 5 | 5 | 5 | 4 | 3 |
| Reference | 32 | $8.10^8$ | 5 | 5 | 2 | 2 | 1 |

[x] Graduated on a descending scale from 5 (good) to 1 (poor)

EXAMPLE 5

8.5 g pentaerythritol, 250 g phthalic anhydride and 295 g coconut acid (fraction 8-10) were added to 330 g organosol which consisted of 61% glycerol and 39% silicic acid. Xylene (about 50 ml) was added and the reaction was allowed to proceed at $200-225^{\circ}C$ under azeotropic distillation of water. At the acid number 5 mg KOH/g, the reaction was discontinued. After dilution to 70% content of solid matter in a mixture of xylene and ethyl glycol in a volume ratio of 60:40, a product was obtained whose viscosity was about 2000 mPa.s.

EXAMPLE 6

The alkyd resin prepared according to Example 5 was tested in respect of its characteristics as a lacquer. The corresponding non-silicate-modified alkyd resin was used as a reference.

Clear lacquers were manufactured from the two alkyds by mixing each alkyd separately with the melamine resin CIBAMIN M100 in the ratio 75:25, based upon the content of dry binder. The lacquers were applied to glass plates and cured for 20 minutes at 200°C. The hardness and flexibility of the lacquer films was determined by means of a Wallace and an Erichsen measuring device, respectively. The resistance to chemicals was determined visually after immersion in a solvent for 1 h at 23°C.

| | Hardness $(kp/mm^2)$ | Flexibility (mm) | Resistance to chemicals [x] | | |
|---|---|---|---|---|---|
| | | | xylene | ethanol | acetone |
| Example 5 | 4.9 | 6.4 | 3 | 5 | 4 |
| Reference | 3.6 | 7.0 | 2 | 4 | 3 |

[x] Graduated on a descending scale from 5 (good) to 1 (poor)

CLAIMS

1. A process of preparing a filler-containing polyester, c h a r a c t e r i z e d in that an acid component including a polyvalent carboxylic acid is caused to react with an alcohol component which at least partly consists of a silica organosol having a polyvalent alcohol as dispersion medium.

2. A process as claimed in claim 1, c h a r a c - t e r i z e d in that the acid component includes a polyvalent unsaturated carboxylic acid.

3. A process as claimed in claim 1 or 2, c h a r - a c t e r i z e d in that the acid component includes a mixture of carboxylic acids, at least one of which is a polyvalent unsaturated carboxylic acid.

4. A process as claimed in claim 3, c h a r a c - t e r i z e d in that the acid component consists of maleic acid or fumaric acid and at least one of phthalic acid, isophthalic acid, adipic acid and azelaic acid.

5. A process as claimed in any one of claims 1-4, c h a r a c t e r i z e d in that the polyvalent alcohol is selected among ethylene glycol, propylene glycol, butylene glycol, glycerol, trimethylol propane and pentaerythritol.

6. An agent for preparing a filler-containing polyester, c h a r a c t e r i z e d in that the agent consists of a silica organosol with a polyvalent alcohol as dispersion medium.

7. An agent as claimed in claim 6, c h a r a c - t e r i z e d in that the alcohol is selected among ethylene glycol, propylene glycol, butylene glycol, glycerol, trimethylol propane and pentaerythritol.

0075545

# EUROPEAN SEARCH REPORT

**European Patent Office**

Application number

EP 82 85 0176.7

## DOCUMENTS CONSIDERED TO BE RELEVANT

| Category | Citation of document with indication, where appropriate, of relevant passages | Relevant to claim |
|---|---|---|
| D,X | US - A- 3 699 049 (L.J. PLUTA et al.)<br>* claim 1 * | 6,7 |
| Y | * claims 1 to 3 * | 1,5 |
| Y | Chemical Abstracts vol. 93, no. 4,<br>28 July 1980,<br>Columbus, Ohio, USA<br>T. MINAMI et al. "Polyester with good properties"<br>page 33, column 1, abstract no. 27262u<br>& JP - A - 80 - 09606 | 1,5 |
| A | Patent Abstracts of Japan,<br>Vol. 5, No. 128, 18 August 1981<br>& JP - A - 56 - 65019 | 1,5 |
| A | Patent Abstract of Japan,<br>Vol. 5, No. 106, 10 July 1981<br>& JP - A - 56 - 47429 | 1,5 |
| A | GB - A - 833 439 (ICI)<br>* claim 1 ; example 1 * | 1 |

**CLASSIFICATION OF THE APPLICATION (Int. Cl. 3)**

C 08 G 63/22
C 08 L 67/02
C 08 L 67/06
C 08 K 3/36
C 01 B 33/14

**TECHNICAL FIELDS SEARCHED (Int.Cl. 3)**

B 01 F 3/12
C 01 B 33/14
C 08 G 63/18
C 08 G 63/22
C 08 G 63/52
C 08 K 3/36
C 08 L 67/00
C 08 L 67/02
C 08 L 67/06

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

The present search report has been drawn up for all claims

| Place of search | Date of completion of the search | Examiner |
|---|---|---|
| Berlin | 25-11-1982 | WIBMER |

EPO Form 1503.1 06.78